(19) Europäisches Patentamt
European Patent Office
Office européen des brevets

(11) **EP 2 563 059 A1**

(12) **EUROPEAN PATENT APPLICATION**

(43) Date of publication:
**27.02.2013 Bulletin 2013/09**

(51) Int Cl.:
**H04W 24/00** (2009.01)  **H04L 12/26** (2006.01)

(21) Application number: **11306068.5**

(22) Date of filing: **26.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Salonidis, Theodoros
75013 PARIS (FR)**

• **Lundgren, Henrik
92350 Le Plessis Robinson (FR)**
• **Chan, An
DAVIS, CA California 95646 (US)**

(74) Representative: **Lindemann, Robert
Deutsche Thomson OHG
European Patent Operations
Karl-Wiechert-Allee 74
30625 Hannover (DE)**

(54) **Method for adapting the data rate during transmission of variable bit-rate data streams**

(57)    A method of adaptively controlling the data rate in a transmission channel carrying a packet data signal corresponding to a data stream of variable data rate is suggested. In accordance with the method the variability of the transmission channel, the data rate requirement of the data stream, and the capacity of the transmission channel are determined. Then, the data rate is adapted so that the transmission channel capacity exceeds the data rate requirement of the data stream, and the next time instant for data rate probing and adaptation is determined based upon the transmission channel variability and data stream rate requirement.

Fig. 1

EP 2 563 059 A1

**Description**

The present invention pertains to data rate adaptation of transmission channels having variable data rate, notably to wireless transmissions according to the IEEE 802.11 standards, also referred to as WiFi.

Background of the invention

Transmission of streamed data, e.g. video or audio, over transmission channels having a variable transmission bandwidth that may change due to reasons external or internal to the transmitter, e.g. wireless links, may suffer from frame drops caused by channel bandwidth probing, which is regularly scheduled for determining the maximum data rate of the transmission channel and usually followed by switching to the new maximum data rate. Channel bandwidth probing may result in lost data packets if the transmission channel does not support reliable transmission at the new data rate and switching back to a reliable data rate cannot be effected timely enough to prevent buffer underflow at a receiver.

Two generic types of channel bandwidth probing are possible, explicit or implicit probing. In explicit probing, a probing data packet is sent in parallel to a data stream carrying useful data, but at a higher transmitter data rate. The expression parallel in this regard does not necessarily refer to a coincidence in time, but rather to the fact that the channel bandwidth probing signal is independent from the useful data. In implicit probing the probing packet corresponds to a data packet from the useful data that is scheduled to be sent as the next data packet, but at the new transmitter data rate. If the probing packet is lost due to the channel not supporting the new data rate the lost data packet must be retransmitted or is considered lost, possibly causing a noticeable error in the reproduction of the streamed data.

In particular, IEEE 802.11 type wireless networks suffer from a fundamental problem that causes degradation of streamed content, e.g. degradation of video quality. This problem arises due to the probing overhead of the existing physical rate adaptation protocols. "Physical rate" is referred to in the following as "PHY rate" and relates to the transfer rate on the physical layer of the connection. IEEE 802.11 MAC protocols use rate adaptation mechanisms for evaluating the properties of the wireless channel and select an appropriate PHY data rate. To reduce the probing overhead, most existing rate adaptation protocols use implicit probing where the channel is probed using packets from the ongoing data traffic instead of separate control packets. During implicit probing, one or more data packets are sent at a PHY transmission data rate higher than the one currently being used. Probing is carried out periodically. If transmissions at the higher transmission data rate succeed, the channel condition is estimated as good enough to support this higher PHY transmission data rate. Then, an even higher PHY rate is used to send the next few data packets, i.e. the probing is continued, trying to find the maximum transmission data rate of the channel. The process continues until a PHY transmission data rate is set for which most probe transmissions fail. Then the previous, i.e. the last successful or considered good, PHY rate is selected as the new current rate, until the next probing period. The start of the next probing period is typically triggered by different factors, such as number of successful transmissions, measured packet error rate, time lags and so on, according to different implementations.

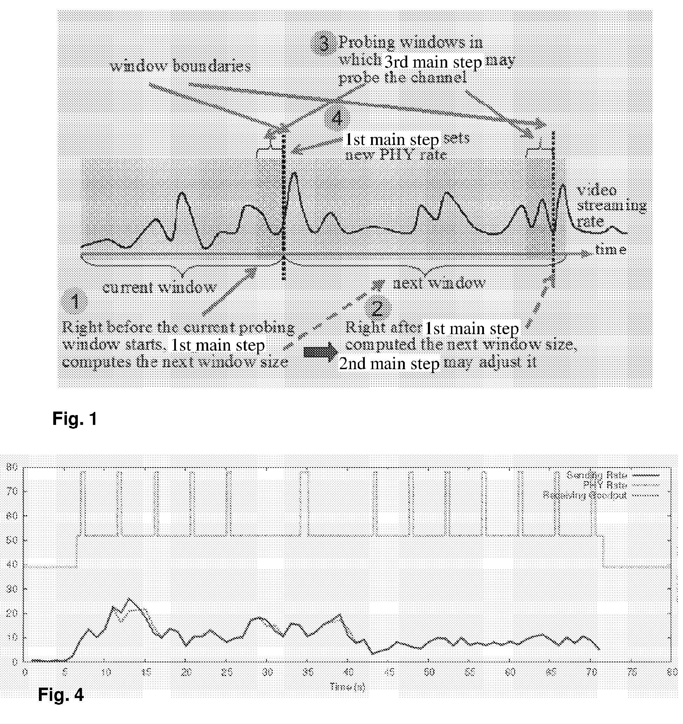

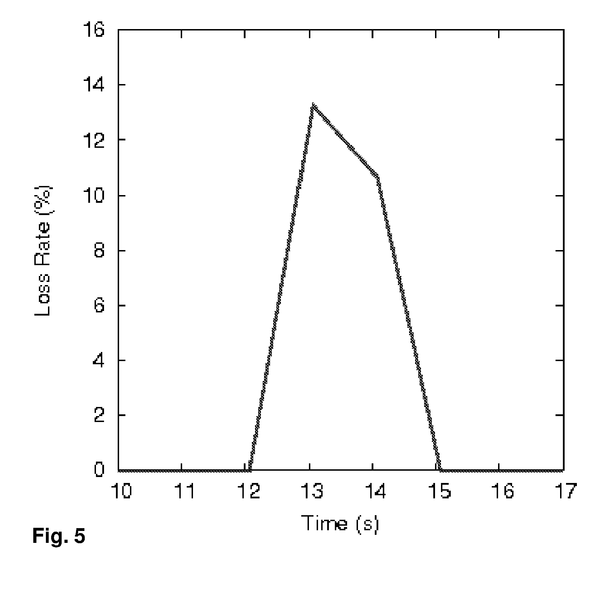

Figure 4 shows an exemplary variable bitrate data stream and the throughput of a transmission channel carrying this data stream. The bitrate of the data stream is shown as a solid line. The throughput, i.e. the actually transmitted and received data rate is shown as a dotted line. The selected transmitter data rate is indicated in the top line having rectangular shape. The exemplary rates are indicated on the y-axis in Mbps. The figure shows that the auto rate selection method used in this example most often uses a PHY transmission data rate of 52Mbps and periodically probes at 78Mbps. During the peak streaming rate period between 12s and 15s on the x-axis indicating the time the throughput drops below the bitrate of the data stream. This indicates that some data packets are lost. Figure 5 is a zoomed portion of figure 4 showing the data packet loss during this period, which is up to 14%.

As discussed above, IEEE 802.11 protocols periodically probe different PHY rates to discover the maximum PHY rate supported by the wireless channel. As likewise discussed above, in order to reduce probing overhead, most of these protocols perform implicit probing with packets of the ongoing data traffic instead of separate probe packets. Probe packets are lost when transmitted at PHY rates that cannot be supported by the current wireless channel state. Although such probe losses may not be perceptible in delay tolerant data applications, they result in delays or losses e.g. of video frames at an application layer, which are both detrimental to SD or HD video streaming performance. SD and HD refer to standard definition and high definition, respectively.

Increasing the probing frequency, i.e. probing more often in a certain time, enables faster transmission data rate adjustments to channel changes and thus potentially higher throughput, but also increases the overhead due to an increased amount of failed probe packets. These probing-induced losses result in channel capacity degradation due to binary exponential back-off and airtime consumption for retransmissions. It is important to note that probing and probe losses occur regardless of whether the current channel condition is good or bad. Unless the channel is good enough to support the highest PHY rate all the time, which is rare and unlikely to occur: due to the dynamic property of wireless channels, the rate adaptation will periodically probe the channel to find a better transmission data rate for maximizing the channel capacity. A variable channel naturally aggravates the probing overhead as it will cause the probing process to be triggered more frequently and result in increased probing induced losses.

Summary of the invention

The present invention introduces a wireless rate adaptation method that optimizes wireless channel probing and PHY rate selection by exploiting the variable bit rate (VBR) streaming rate information of video data that is currently being streamed over the wireless link. In other words, the invention suggests scheduling the probing for variable bit rate data stream connections at times when the bit rate is low when compared to the channel capacity. The present invention reduces or eliminates the channel probing impact on the video stream by scheduling the probes during the low streaming-bit-rate periods.

In accordance with the present invention channel property probing, notably transmission channel capacity probing, for variable bit rate streaming data connections is scheduled at times when the bit rate of the streaming data connection is low when compared to the transmission channel capacity. In contrast to existing probing schemes probing periods are not scheduled at fixed, predetermined time intervals, but in accordance with the properties of the transmission channel and the data stream that is transmitted.

In a development of the invention, rather than aggressively trying to find the maximum PHY rate supported by the wireless channel, and unlike in existing 802.11 rate adaptation protocols, the present invention selects the most reliable PHY rate that supports the near-future peak streaming rate. Reliability may for example be expressed in terms of the block error rate, BLER, or bit error rate, BER, of the transmission. To further reduce the probing overhead, the present invention monitors the Frame Error Rate, FER, and adapts probing frequency to the measured wireless channel variability.

The present invention suggests a cross-layer video-aware PHY rate adaptation protocol. In accordance with the invention a "video streaming rate over time"-waveform from the application layer is used for guiding and controlling the adaptation of the wireless PHY rate. For example, for any video stored on a wireless home network video server, such a waveform can be easily generated, e.g. using real or virtual play back during recording of the video. In one embodiment the waveform of the entire video is divided into suitably sized windows, including variable sized windows for sections of different lengths having a substantially similar play-out, i.e. reproduction, bit rate. The window sizes may be further adapted taking into account the channel capacity variability, probing overhead, and/or the bitrates of concurrent transmissions on the same channel. For each window, a PHY transmission data rate is determined that yields capacity above the peak video streaming rate in the respective window. The window sizes may dynamically be adapted for taking into account the wireless channel variability and probing overhead. For example, the window size may be increased when the quantity used for indicating the transmission quality has small variations only or even remains substantially the same at the current PHY transmission data rate. Preferably, a window's end boundary is selected such that it is not located at times where the bitrate of the data stream is higher than a predetermined value, or high when compared to the channel capacity.

In a development the bitrate-envelope of the streamed content is not determined in advance for the entire content, but rather for a certain segment which is about to be transmitted. The bitrate-envelope of the segment could be determined e.g. while transferring it to a buffer prior to transmission. The bitrate adaptation is then performed for the segment, or for multiple segments for which the bitrate-envelope is available in the buffer. The adaptation process needs to be triggered only at the end of a window for which a PHY transmission data rate had been set, and a change is only necessary if the current PHY transmission data rate is insufficient for the peak data rate of the next data packet or segment. If the currently set PHY transmission data rate is sufficient for the next segment's peak rate, the adaptation process may be skipped, reducing the overhead.

In an embodiment of the invention, the probing is scheduled based on the a priori knowledge of the bitrate-envelope and a current channel capacity or a predicted channel capacity. This may increase the time between subsequent probing intervals, as channel rate adaptation is not necessary when the peak bitrate for a segment to be transmitted remains below the channel capacity.

The method in accordance with the invention invokes three main control loops before the end of each window. The first main control loop computes the size of the next window based on past measurements of channel variability made during the transmission of the current window. Then, the second main control loop refines this size for satisfying rate requirements of the third main control loop, the probing step, which might be scheduled to run during the next window. If the PHY rate of the current window cannot support the peak video streaming rate of the next window, in the third main control loop the wireless channel is probed for a suitable PHY rate. At the beginning of the next window the PHY rate is set in accordance with the results found during the previous main control loops.

In other words, the invention suggests sending a next scheduled data packet at a higher data rate than the preceding packet whenever the bitrate required for such transmission allows with respect to the available channel bandwidth or channel capacity. Thereafter the sender waits for the normal ACK signal. If it is received within the expected/admissible response time, the channel obviously supports the higher data rate. If not, the data packet is sent again, just like a lost packet. This allows for some redundancy in case the probing fails, or does not result in a higher data rate.

In one embodiment the transmission is in unicast mode with acknowledge packets, ACK packets, being transmitted on the MAC layer of the connection. The ACK packets allow for judging if the transmission of data and/or probe packets was successful.

The MAC layer transmission of the ACK packets may be done using the same transmission data rate, or at a lower transmission data rate.

In case the frame error rate FER of a video signal is used for determining the channel capacity in accordance with the invention and a video frame does not fit into a data packet, acknowledge packets of individual data packets are insufficient for deciding to switch to a different transmitter data rate. In such case one or more samples of the video FER are evaluated during the probing period prior to making a decision on changing the transmitter data rate. A video frame may in this case be transmitted as a set of data packets. The video FER may for example be derived at the transmitter side by determining the number of not acknowledged data packets from the set of data packets constituting a video frame.

Brief description of the drawings

In the following sections the invention will be described with reference to the drawings, in which

Figure 1    shows an exemplary bit rate over time diagram and the relevant times at which the various main control loops are invoked;
Figure 2    shows an exemplary flow diagram for the first main control loop;
Figure 3    shows an exemplary flow diagram for the second main control loop;
Figure 4    shows an exemplary variable bitrate data stream and throughput diagram;
Figure 5    is a zoomed portion of figure 4 showing data packet loss.

Detailed description of preferred embodiments

Figures 4 and 5 have been discussed further above and will not be addressed again in this section.

Figure 1 shows an exemplary bit rate over time diagram. The time instants at which the first, second and third main control loops are coming into action are exemplarily shown, accompanied by respective numbers indicating the sequence.

The first control loop computes the size of the next window based on past measurements of channel variability taken during the current window. Then, the second control loop refines this size to satisfy rate requirements of the probing that the third control loop might run during the next window. If the PHY rate of the current window cannot support the peak video streaming rate of the next window the third control loop probes the wireless channel for a suitable PHY rate. At the beginning of the next window, the first control loop sets the PHY rate found during the previous steps.

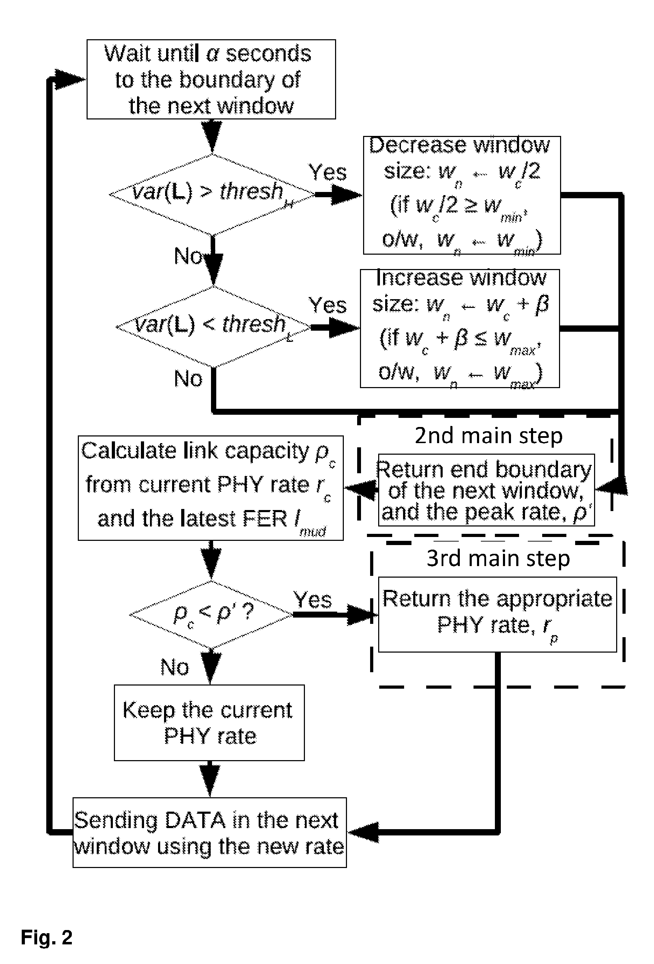

As discussed above the first main control loop relates to correctly setting the probing window size and effecting proper PHY rate adaptation. The first main control loop is the "master" control step that invokes the second and third main control loops. Its operation is depicted in Figure 2. The first main control loop is invoked $\alpha$ seconds before the end of a current window. Parameter $\alpha$ is a system-set parameter and is sufficiently high to include the computations and probings described below.

In the first main control loop the size of the next window is computed based on the wireless channel variability of the current window. For example, let $n_{total}$ be the total number of MAC frames that are transmitted during the current window, including MAC re-transmissions. The channel variability is computed as the variance $var(\mathbf{L})$ of a set of N Frame Error Rate (FER) values, where L = $\{l_1,...,l_N\}$. The $i$-th FER value $l_i$, is the fraction of lost MAC frames within the $i$-th block of c transmitted MAC frames during the current window, i.e. N = $[n_{total}/c]$.

The size of the next window is determined from the current window size by comparing the variance $var(\mathbf{L})$ to a low threshold $thresh_L$ and a high threshold $thresh_H$. If the variance is lower than $thresh_L$, the current window is additively increased by $\beta$ seconds. If it is greater than $thresh_H$, the current window is made smaller, e.g. halved. It is noted that the reduction of the window size is not limited to halving but is arbitrary and can be done by any factor found suitable. If it is in-between the two thresholds, the current window remains at its current length. The window size is bounded by a minimum size, $w_{min}$, and a maximum size, $w_{max}$. Multiplicative decrease helps reacting rapidly to high channel variability. Additive increase helps the system to slowly discover and lock the window size to a channel variability target. The first main control loop calls the second main control loop for refining and finalizing the size of the next window based on the probing overhead requirements. The second main control loop returns the refined window boundary and the peak video streaming rate, p', of the next window.

Further, in the first main control loop the channel capacity $\rho_c$ of the next window is estimated based on the most recently measured FER value $l_N$ and the PHY rate $r_c$ of the current window. The channel capacity of a PHY rate is defined as the maximum UDP throughput that the PHY rate can achieve, e.g. in an IEEE 802.11 n link. It can be computed using existing methods which are not discussed in detail in this specification.

Yet further, in the first main control loop the calculated channel capacity, $\rho_c$, is compared with the peak streaming rate, $\rho'$, returned by from the second main control loop. If $\rho_c$ exceeds $\rho'$, the PHY rate $r_c$ of the current window will be used in the next window. Otherwise, the third main control loop is called for probing the channel and determining the appropriate PHY rate to use. Once the PHY rate of the next window is determined, it is set at the beginning of the next window through the first main control loop.

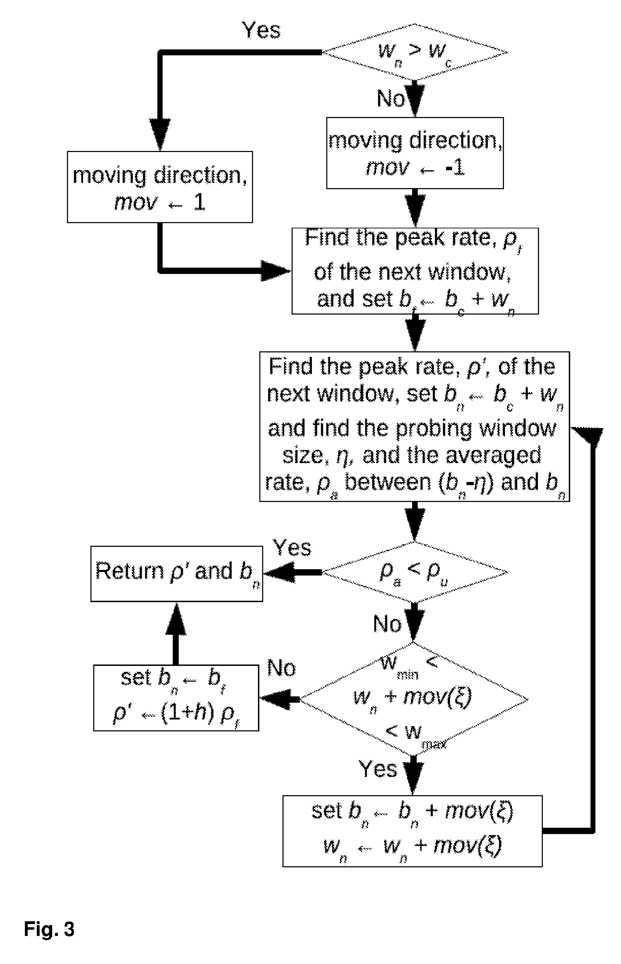

The second main control loop refines the size of the next window computed by the first main control loop for handling the probing overhead. Since probing only occurs near the end boundary of the window, the position of the end boundary should be carefully chosen to minimize the impact of probing on video streaming performance. Figure 3 depicts the operation of the second main control loop. Let $b_n$ be the end boundary of the next window computed by the first main control loop. Based on the streaming rate before $b_n$, the second main control loop calculates a probing window size $\eta$ that can support all probing packets. More specifically, $\eta$ is computed to satisfy the following equation:

$$\int_{b_n - \eta}^{b_n} f(t)\, dt > n_p(P_{802.11})(|\mathbf{R}| - 1) \tag{1}$$

where $f(t)$ is the video streaming rate at time $t$, $n_p$ is the number of ongoing data frames used for probing at each PHY rate, $P_{802.11}$ is the average WLAN frame size used for video streaming, and R is the set of IEEE 802.11 n PHY rates. The average video streaming rate $\rho_a$ from time $b_n$-$\eta$ to $b_n$ should also satisfy the following equation:

$$\rho_a < \rho_u \tag{2}$$

The maximum rate requirement $\rho_u$ exists to ensure that the probing overhead will not cause the rate to exceed the peak video streaming rate $\rho'$ of the next window. Such probing overhead causes capacity penalty. Let h be the average capacity penalty caused by probing, then:

$$\rho_u = \frac{1}{1 + h}\rho' \tag{3}$$

If equation 2 is *not* satisfied, the second control loop moves the end boundary of the next window in steps of $\xi$ seconds until it is satisfied. If the current window size was increased by the first control loop, the second control loop moves the end boundary later; otherwise it moves it earlier. After each step of moving, $b_n$, $\rho'$, $\rho_u$, $\rho_a$ and $\eta$ are updated accordingly. Once equation 2 is satisfied, the second control loop returns the final end boundary $b_n$ and the final peak rate p'.

As in the first control loop, the minimum window size, $w_{min}$, and the maximum window size, $w_{max}$, also apply to the second control loop. If those limits are exceeded and equation 2 has not yet been satisfied, the second control loop returns the window size and boundary that was originally computed by the first control loop. However, instead of p' it returns a higher value (1 + *h*) p' for the peak rate. Then, the first control loop will check if the current PHY rate satisfies this higher peak rate which includes the probing overhead. If not, it will call the third control loop for searching for such PHY rate.

The third control loop probes the channel when the capacity $\rho_c$ of the current window cannot support the peak streaming rate p' of the next window. During operation, an IEEE 802.11 n system must select among 16 PHY rates, which include both SDM and STBC MIMO modes. The third control loop reduces probing overhead by reducing the number of probed PHY rates. This is achieved by using the property that FER is an increasing function of PHY rate within each MIMO IEEE 802.11 n mode (STBC or SDM). This in turn implies that, for either STBC or SDM mode, the capacity as a function of PHY rate has a single maximum. The third control loop probes each of SDM and STBC modes separately as follows. First, it determines the probing direction by probing a PHY rate one step lower and a PHY rate one step higher than the current rate $r_c$. For each rate it uses implicit probing, i.e., it sends $n_p$ consecutive data frames of the ongoing traffic at that PHY rate and measures the FER. Then it computes the corresponding capacity given the rate and the FER. If both capacities are lower than the capacity $\rho_c$ of $r_c$, the third control loop returns the rate $r_c$ because it yields maximum capacity for this mode. Otherwise, if the lower (higher) step rate gives higher capacity than $\rho_c$, the third control loop continues probing all rates at lower (higher) steps one by one until it finds one with a capacity higher than the peak rate requirement p'. If no such rate is found, the third control loop yields the PHY rate of maximum capacity. Finally, the third control loop compares the capacities of the two PHY rates found for SDM and STBC modes and returns to the first control loop the PHY rate whose capacity exceeds *p'* and has a lower FER, i.e. it is more robust. If none of these two capacities exceed p' the third control loop returns to the first control loop the PHY rate of higher capacity between the two. Note that the term "higher" recited in brackets replaces the term "lower" for probing in the opposite direction.

The invention allows for selecting the most appropriate wireless rate under the given conditions with streaming content currently being transmitted over the link. This ultimately leads to better streaming quality and better Quality of Experience (QoE) for the end user. Further, the invention provides more stable wireless links, which again leads to better streaming quality and better QoE. Also, the number of packet losses caused by the wireless rate adaptation is reduced, which again leads to better streaming quality and QoE, as well as to better capacity utilization of the wireless link. Also, the probing overhead is reduced, which again leads to better capacity utilization of the wireless link.

The present invention may be advantageous in home networking and media delivery. The invention can be used in products such as home gateways and set-top boxes. It is not limited to wireless connections of the IEEE 802.11 type that are exemplarily used in this specification, but may be used in any wireless system that supports multiple wireless data rates.

## Claims

1. Method of adaptively controlling the data rate in a transmission channel carrying a video signal, including:

   - determining the variability of the transmission channel;
   - determining a data rate requirement of the video signal;
   - determining the capacity of the transmission channel;
   - adapting the data rate so that the capacity exceeds the data rate requirement; and
   - determining a time instant of the next data rate adaptation based upon transmission channel variability and video data rate requirement.

2. The method of claim 1, wherein determining the variability of the transmission channel includes measuring one or more signal strength values and/or error rate values, the error rate values including one or more of frame error rate, packet error rate, bit error rate values over a time window, and computing their variability.

3. The method of claim 1, wherein determining the data rate requirement of the video signal includes buffering at least a part of a video signal to be transmitted and analyzing the data rate of the buffered video signal.

4. The method of claim 1, wherein determining the capacity of the transmission channel includes measuring one or more signal strength and/or error rate values, the error rate values including one or more of frame error rate, packet error rate, bit error rate of the video signal, and relating the measured value to a transmission channel throughput, or directly measuring transmission channel throughput, over a time window.

5. The method of claim 1, wherein adapting the data rate includes maintaining a current data rate if the estimated transmission channel capacity exceeds the data rate requirement of the video signal until the next data rate adaptation is scheduled, or selecting a different eligible data rate which provides a transmission channel capacity that exceeds the data rate requirement of the video signal.

6. The method of claim 5, wherein the selection of a different eligible data rate includes probing the transmission channel at different data rates by repeatedly selecting and transmitting at different data rates and determining the respective capacity of the transmission channel, and selecting a data rate whose capacity is higher than the data rate requirement of the video signal.

7. The method of claim 5 or 6, wherein probing the transmission channel includes a first step of determining probing direction by probing at the next eligible data rate higher than the current data rate and at an the next eligible data rate lower than the current data rate; and a second step of continuing probing at higher data rates if the capacity of the next eligible higher data rate is higher than the capacity of the next eligible lower data rate, or continuing probing at lower data rates if the capacity of the next eligible lower data rate is higher than the capacity of the next eligible higher data rate, until a data rate with higher capacity than the data rate requirement of the video signal is found or until all eligible data rates are probed.

8. The method of claim 1, wherein determining a time instant of the next data rate adaptation includes determining a time window during which a data rate of the video signal remains below a predetermined threshold and/or comparing the data rate variability of the transmission channel to a low and high threshold, wherein a time window length is decreased if the variability exceeds the high threshold, wherein the time window length is increased if the variability falls below the low threshold, and wherein the time window length is maintained if the variability remains between the two thresholds.

9. The method of claim 8, wherein the time instant of the next data rate adaptation is located at the boundary of a time window.

10. The method of claim 8, wherein adapting the data rate is performed at a time within a time window when the data rate of the video signal is below a predetermined threshold.

**Fig. 1**

**Fig. 4**

Wait until $\alpha$ seconds to the boundary of the next window

$var(L) > thresh_H$ — Yes → Decrease window size: $w_n \leftarrow w_c/2$ (if $w_c/2 \geq w_{min}$, o/w, $w_n \leftarrow w_{min}$)

No

$var(L) < thresh_L$ — Yes → Increase window size: $w_n \leftarrow w_c + \beta$ (if $w_c + \beta \leq w_{max}$, o/w, $w_n \leftarrow w_{max}$)

No

2nd main step

Calculate link capacity $\rho_c$ from current PHY rate $r_c$ and the latest FER $l_{mud}$

Return end boundary of the next window, and the peak rate, $\rho'$

3rd main step

$\rho_c < \rho'$ ? — Yes → Return the appropriate PHY rate, $r_p$

No

Keep the current PHY rate

Sending DATA in the next window using the new rate

Fig. 2

9

**Fig. 3**

Fig. 5

Europäisches
Patentamt

European
Patent Office

Office européen
des brevets

# EUROPEAN SEARCH REPORT

Application Number

EP 11 30 6068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHAN S ET AL: "A Rate-Adaptive MAC for IEEE 802.11 Networks", COMMUNICATION NETWORKS AND SERVICES RESEARCH CONFERENCE, 2008. CNSR 2008. 6TH ANNUAL, IEEE, PISCATAWAY, NJ, USA, 5 May 2008 (2008-05-05), pages 463-469, XP031252478, ISBN: 978-0-7695-3135-9 | 1-7 | INV. H04W24/00 H04L12/26 |
| A | * abstract * * page 464, left-hand column, line 1 - page 467, left-hand column, line 43 * ----- | 8-10 | |
| A | STARSKY H.Y WONG, HAO YANG, SONGWU LU, VADUVUR BHARGHAVAN: "Robust Rate Adaptation for 802.11 Wireless Netowrks", ACM, 2 PENN PLAZA, SUITE 701 - NEW YORK USA, 23 September 2006 (2006-09-23), - 26 September 2006 (2006-09-26), XP040047131, * the whole document * ----- | 1-10 | |
| A | IEEE: "IEEE Standard for Information technology-Telecommunications and information exchange between systems-Local and metropolitan area networks-Speicfic requirements Part 11: wireless Lan Medium Access Control (MAC) and Phsical Layer (PHY) Specifications Amendment 5: Enhancements for higher Throughput", IEEE STD 802.11NTM-2009, IEEE, US, 29 October 2009 (2009-10-29), pages 1-536, XP007919661, * Sections 9 and 20 * ----- | 1-10 | TECHNICAL FIELDS SEARCHED (IPC) H04L H04W |

The present search report has been drawn up for all claims

| Place of search | Date of completion of the search | Examiner |
|---|---|---|
| The Hague | 15 December 2011 | Clemente Lafuente, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)